# EUROPÄISCHE PATENTANMELDUNG

(11) **EP 0 924 406 A1**
(43) Veröffentlichungstag der Anmeldung: **23.06.1999**
(21) Anmeldenummer: 97810999.9
(22) Anmeldetag: 18.12.1997
(51) Int. Cl.: F02C 3/30, F02C 7/16, F02C 7/08, F01K 21/04

(54) **Gasturbine mit in der Abgasströmung parallel angeordneten Rekuperator und Dampferzeuger**

(71) Anmelder: Asea Brown Boveri AG, 5401 Baden (CH)
(72) Erfinder: Frutschi, Hansulrich, 5223 Riniken (CH)

(57) **Zusammenfassung**

Bei einem Verfahren zum Betrieb einer Gasturbogruppe wird ein Abgasstrom (13) aus der letzten Turbine (5) mindestens in zwei parallel geführte Teilströme (14, 15) aufgeteilt wird. Der erste Teilstrom (14) durchströmt einen Rekuperator (26), der zweite Teilstrom (15) durchströmt einen Dampferzeuger (27). Die gewonnene Dampfmenge (16) aus dem Dampferzeuger (27) wird an geeigneter Stelle in eine zum Betrieb einer zur Gasturbogruppe gehörigen Brennkammer (2) verwendete Verbrennungsluft (2, 27) eingeleitet. Damit werden die Abgase aus der Turbine nutzbringend optimal abgekühlt, was einen maximierten Wirkungsgrad ergibt.

## Beschreibung

### Technisches Gebiet

Die Erfindung betrifft ein Verfahren zum Betrieb einer Gasturbogruppe gemäss Oberbegriff des Anspruches 1.

### Stand der Technik

Bei einer zum Stand der Technik gehörenden Gasturbogruppe mit einem nachgeschalteten Rekuperator zur kalorische Nutzung der Abgase aus einer zur Gasturbogruppe gehörigen Turbine lässt sich allgemein feststellen, dass die kalorische Ausbeute aus den noch relativ heissen Abgasen mangelhaft ausfällt, so dass Rauchgase abgelassen werden, deren Temperatur gut noch 250°C beträgt. Diese Lage akzentuiert sich bei sequentiell befeuerten Gasturbogruppen, da dort lediglich ca. 60% der zur Verfügung stehenden verdichteten Luft durch den Rekuperator geschickt werden können. Demgegenüber wird der Rekuperator mit ca. 103% Abgas beaufschlagt, so dass daraus leicht ersichtlich ist, dass nur ein Teil des kalorischen Potentials dieser Abgase genutzt werden kann. Um hier Abhilfe zu suchen, ist bekanntgeworden, dem ersten Rekuperator einen zweiten nachzuschalten: Mit dieser Vorkehrung soll hier das kalorischen Restpotential der Abgase noch weiter ausgenutzt werden, vorzugsweise indem versucht wird, eine Dampfmenge bereitzustellen, welche dann in eine Dampfturbine eingeleitet wird. Damit lässt sich aber keinen hochwertiger Dampf bereitstellen, so dass mit einer solchen Vorkehrung an sich einen grossen Verlust an Exergie resultiert.

### Darstellung der Erfindung

Hier will die Erfindung Abhilfe schaffen. Der Erfindung, wie sie in den Ansprüchen gekennzeichet ist, liegt die Aufgabe zugrunde, bei einem Verfahren der eingangs genannten Art eine Maximierung des Wirkungsgrades zu erzielen.

Erfindungsgemäss wird dies dadurch erreicht, dass ein Dampferzeuger abgasseitig gegenüber einem Rekuperator parallel geschaltet wird. Der Dampferzeuger nutzt den durch die Kühlluftströme bedingten im Rekuperator nicht abkühlbaren Abgasstrom zur Dampferzeugung, wobei der erzeugte Dampf vorzugsweise stromab des sekundären Strompfades des Rekuperators eingeleitet wird.

Der wesentliche Vorteil der Erfindung ist darin zu sehen, dass die Abgase aus der Turbine nutzbringend optimal abgekühlt werden, was einen maximalen Wirkungsgrad resultiert.

Das Verfahren erreicht seine grösste Effizienz, wenn es mit einer näherungsweise isothermen Verdichtung in der Verdichtereinheit kombiniert wird.

Vorteilhafte und zweckmässige Weiterbildungen der erfindungsgemässen Aufgabenlösung sind in den weiteren abhängigen Ansprüchen gekennzeichnet.

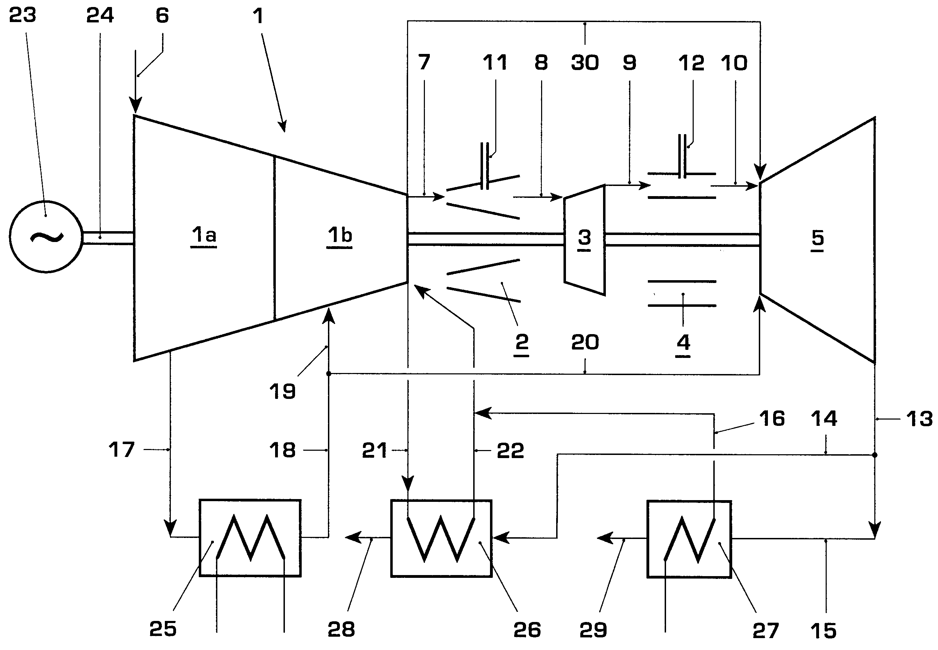

Im folgenden wird anhand der Zeichnung ein Ausführungsbeispiel der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnung

Die einzige Figur zeigt eine Schaltung einer sequentiell befeuerten Gasturbogruppe mit einem Rekuperator, einem mit diesem Rekuperator parallel geschalteten Dampferzeuger und mit Mitteln für eine annähernd isotherme Verdichtung.

### Weg zur Ausführung der Erfindung, gewerbliche Verwendbarkeit

Die Figur zeigt eine Gasturbogruppe, welche prozesseinleitend eine Verdichtereinheit 1 aufweist, in welcher die Kompression der angesaugten Luft 6 stattfindet. Die so verdichtete Luft 7 strömt, nach einer Zwischenbehandlung, welche weiter unten näher beschrieben wird, in eine erste Brennkammer, Hochdruck-Brennkammer, HD-Brennkammer 2, in welcher die Aufbereitung der verdichteten Luft 7 zu Heissgasen 8 anhand eines Brennstoffes 11 stattfindet. Stromab dieser HD-Brennkammer 2 operiert eine erste Turbine, Hochdruck-Turbine, HD-Turbine 3, in welcher die in der HD-Brennkammer 2 bereitgestellten Heissgase 8 eine Teilentspannung erfahren. Diese Teilentspannung ist dadurch charakterisiert, dass die daraus abströmenden teilentspannten Heissgase 9 noch eine relativ hohe Temperatur, in der Grössenordnung von 1000° C und mehr aufweisen. Dementsprechend besteht die genannte HD-Turbine 3 aus wenigen Laufschaufelstufen, vorzugsweise 1-3 Stufen. Stromab dieser HD-Turbine 3 wirkt eine zweite Brennkammer, Niederdruck-Brennkammer, ND-Brennkammer 4, welche nach einem Selbstzündungsprinzip betrieben wird. Diese ND-Brennkammer 4 hat im wesentlichen die Form eines durchströmten Ringkanals, in welchem vorzugsweise ein gasförmiger Brennstoff 12 eingedüst wird. Bei einer Temperatur der teilentspannten Heissgase 9 aus der HD-Turbine 3 auf genanntem Temperaturniveau findet in der ND-Brennkammer 4 eine Selbstzündung des eingedüsten Brennstoffes 12 statt. Diese ND-Brennkammer 4 weist nicht dargestellte Strömungshilfen auf, welche im Bereich der Flammenfront eine stabilisierende Rückströmung zur Gewährleistung eines sicheren Brennbetriebes bewerkstelligen. Die teilentspannten Heissgase werden demnach in der ND-Brennkammer 4 wieder zu vollwertigen Heissgasen 10 aufbereitet, deren Temperatur in etwa derjenigen der HD-Brennkammer 2 entspricht. Grundsätzlich sind die Temperaturen der Heissgase 8, 10 nicht unmittelbar begrenzt; diese Grenze wird vielmehr und vordergründig durch die zu beaufschlagende Turbine und deren Maschinenelemente vorgegeben. Die Heissgase 10 beaufschlagen sodann eine zweite Turbine, Niederdruck-Turbine, ND-Turbine 5, in welcher zunächst die endgültige gasturbinenmässige Entspannung stattfindet. Das kalorische Remanenz-Potential der Abgase 13 wird sodann für weitere Zwecke eingesetzt, die weiter unten zur Erläuterung kommen werden. Ein Generator 23 sorgt für die Stromerzeugung aus der Arbeitsleistung der beiden Turbinen 3, 5. Ein wesentliches Merkmal der gezeigten Gasturbogruppe ist die einheitliche Lagerung aller Strömungsmaschinen 1, 3, 5 auf einer durchgehenden Welle 24, welche vorzugsweise auf zwei nicht gezeigten Lagern abgestützt ist. Die beiden Brennkammern 2, 4 nehmen den intermediären Raum zwischen den beiden Turbinen 3, 5 ein, wobei die HD-Brennkammer 2 vorzugsweise als Ringbrennkammer ausgebildet ist, und anordnungsmässig weitgehend der Verdichtereinheit 1 übergelagert wird, dergestalt, dass diese Massnahme wesentlich dazu beiträgt, die Gasturbogruppe zu einer kompakteren Einheit werden zu lassen. Diese Möglichkeit lässt sich aus strömungstechnischen Ueberlegungen bezüglich der ND-Brennkammer 4 nicht im selben Ausmass realisieren; immerhin ist hier zu sagen, dass die letztgenannte Brennkammer sehr kurz ausfällt, so dass das angestrebte Ziel, eine kompakte Gasturbogruppe bereitzustellen, durchaus erreicht wird. Im Zusammenhang mit der weiteren Ausgestaltung einer solchen Gasturbogruppe wird auf EP-0 620 362 A1 hingewiesen, wobei diese Druckschrift einen integrierenden Bestandteil vorliegender Beschreibung bildet.

Die Verdichtereinheit 1 besteht aus mindestens zwei Teilverdichtern 1a, 1b. Aus dem Teilverdichter 1a strömt die teilverdichtete Luft 17 durch einen Zwischenkühler 25, um anschliessend als gekühlte teilverdichtete Luft 18 in den zweiten Teilverdichter 1b zurückströmen, in welchem die Endverdichtung stattfindet. Vor Eintritt in den Teilverdichter 1b wird ein Teil 20 dieser gekühlten teilverdichteten Luft abgezweigt und als Kühlluft für die thermisch hochbelasteten Aggregate der Gasturbogruppe eingesetzt; hier wird diese Kühlluft 20 zur Kühlung der ND-Turbine 5 eingesetzt. Der andere Teil 19 strömt zur Weiterverdichtung in die Verdichtereinheit 1. Am Ende der Verdichtung lässt sich nach Bedarf ein weiterer Teil 30 Luft zu Kühlzwecken abzweigen, hier ebenfalls zur Kühlung der ND-Turbine 5, wie dies aus der Figur ersichtlich ist, wobei selbstverständlich auch andere Aggregate im geschlossenen oder offenen Strömungspfad gekühlt werden können.

Die Abgase 13 aus der zweiten Turbine 5 teilen sich in zwei Teilströme 14, 15 auf, deren Mengen von Fall zu Fall bestimmt werden, dies im wesentlichen in Abhängig der Kühlluftströme 20, 30 dieser Abgase 13 sowie der angestrebten Rekuperationsgrade in den nachfolgenden Wärmetauschverfahren. Eine weitergende Aufteilung des Abgasstromes 13 ist auch möglich.
Ein erster Abgasteilstrom 14 durchströmt einen Rekuperator 26, der vom einem Teil endverdichtete Luft 21 beaufschlagt wird. Die kalorisch aufbereitete Druckluft 22 strömt als Druckluftstrom 7 zum Betrieb der HD-Brennkammer 2. Der zweite Teilstrom 15 strömt durch einen Dampferzeuger 27 und produziert dort im Wärmetauschverfahren einen hochwertigen Dampf 16. Dieser lässt sich mannigfaltig verwenden: Eine Vorzugsvariante besteht darin, dass dieser Dampf 16 der im Rekuperator kalorisch aufbereitete Luft 22 beigemischt wird. Das kalorisch genutzte Abgas sowohl aus dem Rekuperator 26 als auch aus dem Dampferzeuger 27 strömt als Rauchgas 28, 29 ab.

Mit dieser Aufteilung lassen sich die Abgase, unabhängig ihrer Eigenschaften, nutzbringend optimal abkühlen, was einen maximierten Wirkungsgrad gewährleistet. Mit der Aufteilung der Abgase und mit deren mengenmässigen Zuordnung lassen sich zudem die verschiedenen Parameter der Gasturbogruppe gezielt auffangen, womit der finale Zweck immer zu erreichen ist. Die Schaltung lässt sich wirkungsgradmässig effizienter gestalten, wenn sie mit einer Zwischenkühlung im Zusammenhang mit der Verdichtereinheit ergänzt wird, wobei diese Kühlung so ausgelegt ist, dass eine näherungsweise isotherme Verdichtung erzielt wird.

### Bezugszeichenliste

- 1: Verdichtereinheit
- 1a: Teilverdichter
- 1b: Teilverdichter
- 2: HD-Brennkammer
- 3: HD-Turbine
- 4: ND-Brennkammer
- 5: ND-Turbine
- 6: Ansaugluft
- 7: Verbrennungsluft
- 8: Heissgase
- 9: Teilentspannte Heissgase
- 10: Heissgase
- 11: Brennstoff
- 12: Brennstoff
- 13: Abgase
- 14: Teilstrom Abgase
- 15: Teilstrom Abgase
- 16: Dampf
- 17: Teilverdichtete Luft
- 18: Teilverdichtete gekühlte Luft
- 19: Menge teilverdichtete gekühlte Luft
- 20: Kühlluftmenge
- 21: Menge endverdichtete Luft
- 22: Kalorisch aufbereitete endverdichtete Luft
- 23: Generator
- 24: Welle
- 25: Zwischenkühler
- 26: Rekuperator
- 27: Dampferzeuger
- 28: Rauchgase
- 29: Rauchgase
- 30: Kühlluft

## Patentansprüche

1. Verfahren zum Betrieb einer Gasturbogruppe, im wesentlichen bestehend aus einer Verdichtereinheit, mindestens einer Brennkammer, mindestens einer Turbine und einem Generator, dadurch gekennzeichnet, dass der Abgasstromstrom (13) aus der letzten Turbine (5) mindestens in zwei parallel geführte Teilströme (14, 15) aufgeteilt wird, dass der erste Teilstrom (14) einen Rekuperator (26) durchströmt, dass der zweite Teilstrom (15) einen Dampferzeuger (27) durchströmt, und dass die gewonnene Dampfmenge (16) aus dem Dampferzeuger (27) an geigneter Stelle in eine zum Betrieb der Brennkammer (2) verwendete Verbrennungslutt (7, 22) eingeleitet wird.

2. Verfahren zum Betrieb einer Gasturbogruppe, dadurch gekennzeichnet, dass die Verdichtereinheit (1) in Wirkverbindung mit mindesten einem Zwischenkühler (25) betrieben wird.

3. Verfahren nach den Ansprüchen 1 und 2, dadurch gekennzeichnet, dass die Gasturbogruppe nach einer sequentiellen Befeuerung (2, 4) betrieben wird.
